# FASCICULE DE BREVET EUROPEEN

(11) **EP 0 487 757 B1**
(45) Date de publication et mention de la délivrance du brevet: **07.06.1995**
(21) Numéro de dépôt: 90122501.1
(22) Date de dépôt: 26.11.1990
(51) Int. Cl.: A23P 1/12, A23L 1/18, A21C 11/04

(54) **Procédé et dispositif de fabrication de produits alimentaires par cuisson coextrusion**
Verfahren und Vorrichtung zum Herstellen von Nahrungsmitteln durch Koch-Koextrusion
Process and apparatus for making foodstuffs by co-extrusion cooking

(43) Date de publication de la demande: 03.06.1992
(73) Titulaire: SOCIETE DES PRODUITS NESTLE S.A., 1800 Vevey (CH)
(72) Inventeur: Heck, Ernst, CH-1302 Vufflens la Ville (CH); Horisberger, Jean, CH-1024 Ecublens (CH)

(56) Documents cités:
- EP-A- 0 251 630
- FR-A- 2 322 555
- US-A- 3 142 266

## Description

La présente invention est relative à un procédé et un dispositif de fabrication de produits alimentaires par cuisson coextrusion.

La présente invention est plus particulièrement relative à la fabrication de produits alimentaires par cuisson coextrusion dans laquelle un, ou plusieurs, boudin cuit coextrudé est ensuite découpé pour donner des produits de forme déterminée.

On connaît ainsi, par exemple, par le document US 3,480, 445, un procédé et un dispositif d'obtention d'un produit coextrudé dans lequel une enveloppe externe à base de céréales est extrudée sous pression avec une faible addition d'eau. Lors de cette opération, l'eau est vaporisée et l'enveloppe est cuite et, après la sortie de cette enveloppe hors de la filière d'extrusion quand elle se retrouve à la pression atmosphérique, le produit cuit s'expanse radialement. Dans le même temps, à l'intérieur de l'enveloppe de céréales, une garniture quelconque, par exemple constituée de produits laitiers ou de fruits, est coextrudée.

Le produit obtenu est finalement refroidi et enfin découpé en morceaux.

On connaît par ailleurs, par exemple par le document EP 178 878, un dispositif pour le découpage d'un boudin constitué d'une enveloppe externe en pâte et d'une garniture interne quelconque.

Selon ce document, une bande convoyeuse transporte le boudin, au moins un couteau étant disposé au-dessus de cette bande convoyeuse. Le couteau est animé d'un mouvement alternatif de haut en bas combiné à un mouvement longitudinal dans le sens d'avancée du produit à découper.

Mais, d'une part, ce document n'est pas relatif à un produit cuit et, d'autre part, il ne permet que de découper un boudin perpendiculairement à son axe.

Or, les produits cuits coextrudés ne peuvent être assimilés aux produits obtenus par simple coextrusion qui doivent être ensuite cuits pour donner un produit alimentaire fini.

En effet, les produits non cuits sont très déformables. Ainsi, la compression de la garniture, qui accompagne inévitablement le découpage, entraîne simplement un étirement de l'enveloppe externe qui permet à ladite garniture comprimée de trouver la place nécessaire.

En revanche, les produits obtenus par une cuisson coextrusion sont cuits et conduisent directement après découpage à l'obtention d'un produit fini.

Ainsi, le caractère plastique de produit obtenu après cuisson coextrusion est très limité et une compression de la garniture causée par un couteau ne peut être compensée totalement par un étirement de l'enveloppe qui ne peut être que faible.

De plus, l'art antérieur ne permet pas de pouvoir réaliser, à partir d'un boudin coextrudé, les produits de forme quelconque, la section de boudin coextrudé étant par ailleurs de forme constante.

La présente invention a donc pour but de résoudre ces problèmes.

La présente invention a donc pour objet un procédé de découpage d'un produit alimentaire cuit coextrudé produit par cuisson coextrusion d'une enveloppe externe à base de céréales et d'une garniture interne quelconque, caracterisé en ce que, après cuisson coextrusion et alors que l'enveloppe externe est encore thermoplastique, ledit produit est découpé par matriçage entre deux surfaces cylindriques, parallèles, mobiles en rotation autour de leur axe respectif, ledites surfaces présentant respectivement une empreinte femelle et une empreinte mâle et, pendant l'opération de matriçage, coopérant pour réaliser un cisaillement du produit coextrudé.

Grâce à ce matriçage, alors que le produit est encore thermoplastique, il est possible de découper le produit cuit coextrudé selon une forme quelconque tout en assurant une suture parfaite des lèvres de l'enveloppe dans les zones où l'outil de coupe constitué par les deux empreintes et leur ligne d'arête traverse la garniture.

La présente invention a aussi pour objet un dispositif pour la mise en oeuvre du procédé selon l'invention dans lequel, après un dispositif de réalisation d'un produit cuit coextrudé, est prévu, dans une zone où l'enveloppe externe du produit est encore thermoplastique, un dispositif de matriçage constitué d'une empreinte femelle en creux située sur une surface cylindrique et d'une empreinte mâle en relief située sur une surface cylindrique, ces deux surfaces cylindriques étant parallèles et mobiles en rotation autour de leur axe respectif, l'empreinte femelle et l'empreinte mâle présentant chacune une l'arête de l'arrière et l'arête du front, l'arête de l'arrière et l'arête du front de l'empreinte mâle présentant chacune d'un profil correspondant à celui de l'arête de l'arrière et l'arête du front de l'empreinte femelle.

Grâce à ce dispositif, il est possible de découper, dans un produit constitué d'un boudin coextrudé expansé, un produit de forme quelconque.

D'autres caractéristiques et avantages ressortiront à la suite de la description qui va suivre faite en référence aux dessins annexés donnés uniquement à titre d'exemples non limitatifs et parmi lesquels :
- La Fig. 1 représente une vue schématique du dispositif selon l'invention.
- La Fig. 2 représente une vue en coupe, perpendiculairement à l'axe des cylindres de découpe, des cylindres de découpe du dispositif selon l'invention.
- La Fig. 3 représente une vue de détail en coupe, selon un plan passant par les axes des cylindres de découpe selon la ligne A-A de la Fig. 1, illustrant la mise en contact d'une empreinte mâle et d'une empreinte femelle.
- La Fig. 4 représente une vue analogue à la Fig. 3 illustrant la découpe d'un produit coextrudé.
- La Fig. 5 est une variante de la vue de détail représentée à la Fig. 3.

Le procédé selon la présente invention consiste essentiellement à fabriquer un boudin de section constante sur toute sa longueur, par cuisson coextrusion, selon un procédé connu tel que par exemple décrit dans le document US 3,480,445.

Ensuite, alors que l'enveloppe externe du boudin est encore thermoplastique, le boudin obtenu est découpé par matriçage entre deux empreintes présentant chacun une ligne d'arête.

Les propriétés thermoplastiques ne durent que quelques secondes à la sortie du dispositif de cuisson coextrusion. C'est ce laps de temps qui, joint à la vitesse de transport du boudin coextrudé, du dispositif de cuisson coextrusion vers le dispositif de matriçage, détermine la localisation de ce dispositif de matriçage par rapport au dispositif de cuisson coextrusion.

Un exemple de composition thermoplastique d'une enveloppe d'un boudin coextrudé pourra être constitué d'un mélange de farine de blé, de sucre et sel, par exemple selon les proportions en poids suivantes :
- 89% farine
- 10% sucre
- 1% sel
Ce mélange est ensuite additionné de 5 à 20% d'eau.

En effet, dans les conditions habituelles de cuisson coextrusion, à une pression d'environ 100 bars et à une température de l'ordre de 150°C, il a été trouvé que ces teneurs en eau constituaient un bon compromis entre l'expansion et le caractère thermoplastique.

La garniture, qui constitue le coeur du produit coextrudé, peut être réalisée à partir d'un mélange en poids de 70% de matières grasses, 20% de fibres, 10% de sucre, dans le cas où il est désiré d'obtenir un produit destiné à l'alimentation des animaux de compagnie tels que les chiens ou les chats.

Selon ce procédé, les deux lignes d'arêtes étant situées sur deux surfaces cylindriques, parallèles, mobiles en rotation autour de leur axe respectif, les deux lignes d'arêtes, pendant l'opération de matriçage, coopèrent pour effectuer le découpage du produit coextrudé par cisaillement au niveau de leurs points de contact.

Il peut être intéressant, dans le cadre de la réalisation de produits plats ou lenticulaires, de réaliser, entre la sortie de la filière et l'opération de découpage, une opération d'aplatissage.

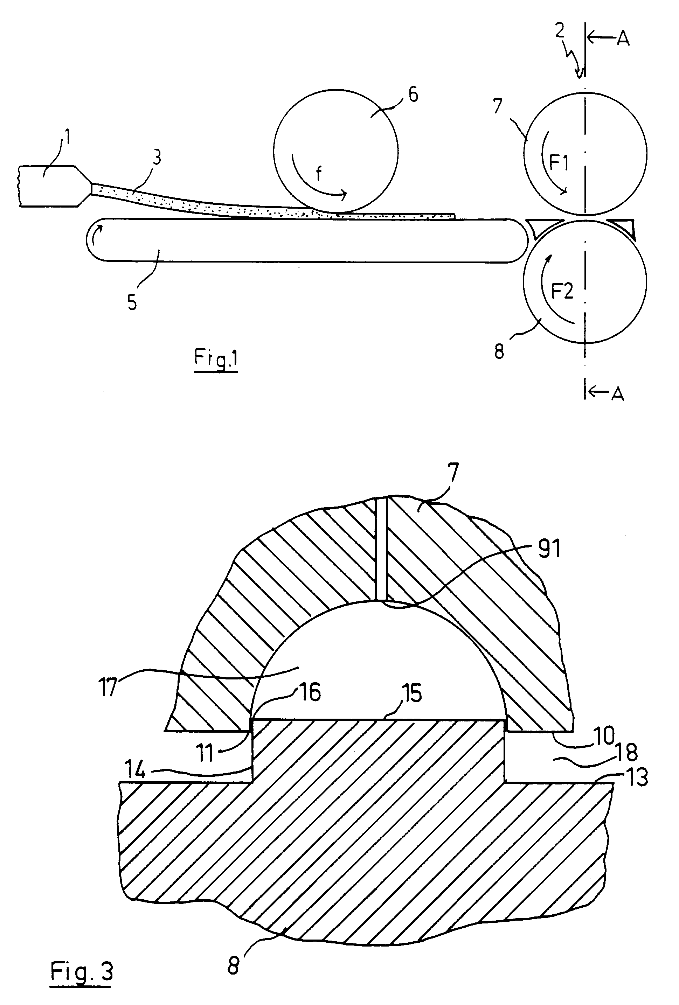

Pour la mise en oeuvre du procédé selon l'invention, il est utilisé un dispositif, tel que décrit à la Fig. 1, qui comprend un dispositif 1 de cuisson coextrusion, tel que par exemple décrit dans le document US 3,480,445, et un dispositif 2 de découpe d'un produit 3 obtenu par le dispositif de cuisson coextrusion. Entre ledit dispositif 1 de cuisson coextrusion et le dispositif 2 de découpe peut être interposé un dispositif d'aplatissement du produit 3. Une bande transporteuse 5 peut être prévue pour diriger le produit 3 à partir du dispositif 1 de cuisson coextrusion vers le dispositif 2 de découpe. Cette bande transporteuse 5 peut, bien entendu, être remplacée par tout autre moyen adéquat, par exemple par un convoyeur à rouleaux.

Le dispositif optionnel d'aplatissement du produit 3 peut être constitué d'un cylindre 6, d'axe horizontal, mobile en rotation autour de son axe selon la flèche f et perpendiculaire au sens d'avancement de la bande transporteuse 5. Ce cylindre 6 est écarté de la bande 5 d'une hauteur inférieure à l'épaisseur du produit 3 réalisé par le dispositif 1 de cuisson extrusion, dans le cas où un aplatissement est désiré.

Comme toujours illustré à la Fig. 1, le dispositif de découpe 2 présente deux cylindres 7 et 8 de découpe, superposés, d'axes horizontaux parallèles, perpendiculaires au sens d'avancement de la bande transporteuse 5, mobiles en rotation autour de leur axe et tournant en sens opposés selon les flèches F1 et F2, le produit 3, éventuellement aplati au préalable, étant destiné à être découpé entre les deux cylindres 7 et 8 au niveau de leur zone de contact.

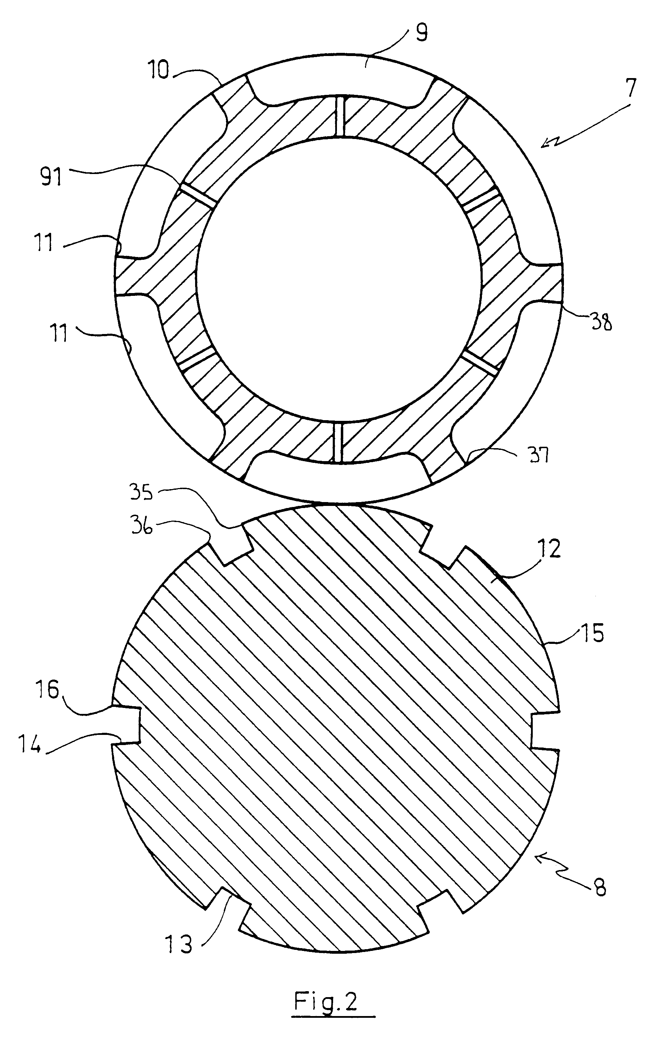

Comme on le voit à la Fig. 2, le cylindre supérieur 7 présente, régulièrement réparties à sa surface externe, des empreintes femelles 9, en creux, écartées radialement les unes des autres et séparées par une surface 10, qui peut être une portion de cylindre.

Ainsi, chaque empreinte femelle 9 est limitée par une ligne d'arête 11, constituée par l'intersection de l'empreinte 9 avec la surface 10.

Chaque empreinte femelle 9 peut présenter, à sa surface en creux, un ou plusieurs orifices 91 reliés à une source d'air comprimé par un dispositif non représenté.

Le cylindre inférieur 8 présente, régulièrement réparties à sa surface externe, des empreintes mâles 12, en relief, écartées radialement les une des autres, et séparées par des surfaces en creux 13. Chaque empreinte mâle 12 présente un flanc 14 qui relie la surface 13 qui l'entoure à une surface centrale 15 qui peut être plane ou en creux, ou constituée d'une portion de cylindre.

Ainsi chaque empreinte mâle 12 présente une ligne d'arête 16 constituée par l'intersection du flanc 14 et de sa surface centrale 15.

Comme illustré Fig. 3, cette ligne d'arête 16 est d'un profil correspondant à la ligne d'arête 11 de l'empreinte femelle 9 qui fait face à l'empreinte mâle 12, l'empreinte mâle, préférablement, pénétrant légèrement à l'intérieur de l'empreinte femelle. Mais il est aussi possible de réaliser un dispositif dans lequel les lignes d'arêtes 11 et 16 sont situées sur deux surfaces cylindriques de même rayon dont les axes sont écartés d'un diamètre comme cela est illustré Fig. 5.

Les deux cylindres 7 et 8 sont positionnés l'un par rapport à l'autre de telle manière qu'une empreinte mâle 12 soit toujours en vis-à-vis d'une empreinte femelle 9, la ligne d'arête 16 de l'empreinte mâle 2 étant ainsi en contact avec la ligne d'arête 11 de l'empreinte femelle 9.

Afin de conserver en permanence ce vis-à-vis parfait, les deux cylindres 7 et 8 peuvent être entraînés en rotation par un moteur unique avec deux renvois d'engrenage, chaque engrenage entraînant un des deux cylindres 7, 8.

Comme illustré à la Fig. 3, la mise en regard d'une empreinte mâle 12 et d'une empreinte femelle 9 délimite une cavité 17. De plus l'empreinte mâle 12 étant en relief et l'empreinte femelle 9 étant en creux, la surface 10 du cylindre 7 et la surface 13 et le flanc 14 du cylindre 8 délimitent un espace 18 qui n'est pas dans le même plan que la cavité 17 puisque cet espace 18 et cette cavité 17 sont situés de part et d'autre de la surface 10 du cylindre 7.

Un dispositif approprié dont la forme exacte est dépendante de la forme des empreintes mâles et femelles peut être prévu immédiatement en aval des cylindres 7 et 8 afin de diriger les chutes engendrées par le découpage du produit 3 vers un circuit d'élimination.

Ce dispositif peut être constitué d'un système de coins, tangents au cylindre 7 présentant les empreintes femelles 9, situés, selon l'axe du cylindre 7, de part et d'autre des empreintes femelles 9, en aval de la zone de contact entre l'empreinte mâle 12 et l'empreinte femelle 9.

Un dispositif, constitué par exemple de deux guides latéraux, peut être prévu, en amont du dispositif de découpe 2, pour positionner parfaitement le produit 3 par rapport aux empreintes mâles 12 et femelles 9.

Il va maintenant être décrit le fonctionnement du dispositif selon l'invention.

Un produit 3 coextrudé expansé est réalisé par le dispositif 1 de cuisson coextrusion.

Ce produit est transporté par la bande transporteuse 5 et est éventuellement aplati par le dispositif d'aplatissement.

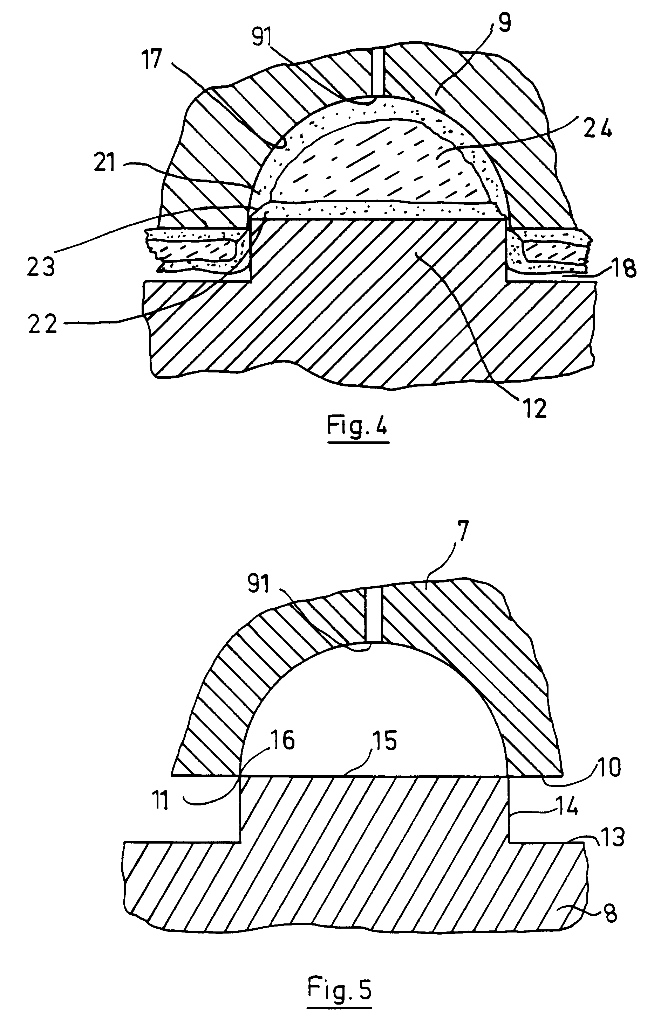

Le produit 3, encore thermoplastique, est ensuite dirigé vers le dispositif de découpe 2, après avoir été positionné par les guides latéraux. Ce produit 3 est, comme illustré Fig. 4, matricé entre une empreinte femelle 9 et une empreinte mâle 12.

Le produit 3 étant dans la cavité 17, les deux lèvres 21 et 22 engendrées par le matriçage de l'enveloppe externe du produit 3 sont mises en contact et génèrent une ligne de suture 23. Les déchets, situés à l'extérieur de la cavité 17 dans l'espace 18 étant par ailleurs dans un plan différent de celui de la cavité 17, il est créé un effort de cisaillement au niveau du contact des lignes d'arêtes 11 et 16 qui favorise le détachement des déchets par rapport au produit situé dans la cavité 17. Il est ainsi réalisé un produit présentant une enveloppe externe continue entourant une garniture interne 24.

Les cylindres 7 et 8 poursuivent leur rotation, les empreintes mâle 12 et femelle 9 se séparent alors que les coins détachent définitivement les chutes générées par le découpage.

Le produit final, encore prisonnier dans l'empreinte femelle creuse 9, est ensuite expulsé par injection d'air comprimé par le ou les orifices 91.

Cette expulsion par injection d'air comprimé a comme avantage supplémentaire de fixer la forme du produit obtenu. En effet, le refroidissement entraîné par cet air comprimé fait que, quand le produit est expulsé, il n'est plus du tout thermoplastique.

Dans le même temps, une nouvelle empreinte mâle 12 se referme sur une autre empreinte femelle 9 selon le procédé décrit ci-avant.

La présente invention permet ainsi le découpage, selon des formes quelconques, d'un produit obtenu par cuisson coextrusion, en conservant une enveloppe externe en céréale et une garniture interne.

## Revendications

1. Procédé de découpage d'un produit alimentaire cuit coextrudé produit par cuisson coextrusion d'une enveloppe externe à base de céréales et d'une garniture interne quelconque, caracterisé en ce que, après cuisson coextrusion et alors que l'enveloppe externe est encore thermoplastique, ledit produit est découpé par matriçage entre deux surfaces cylindriques, parallèles, mobiles en rotation autour de leur axe respectif, ledites surfaces présentant respectivement une empreinte femelle et une empreinte mâle et, pendant l'opération de matriçage, coopérant pour réaliser un cisaillement du produit coextrudé.

2. Procédé selon la revendication 1, dans lequel, pendant l'opération de matriçage, l'arête de l'arrière et l'arête du front des deux empreintes coopére pour réaliser un cisaillement du produit coextrudé.

3. Procédé selon la revendication 1 ou 2, dans lequel, pendant l'opération de matriçage, l'empreinte mâle pénétre dans l'empreinte femelle.

4. Procédé selon la revendication 1, 2 ou 3, dans lequel, avant d'être découpé, le produit est aplati.

5. Procédé selon la revendication 1, 2, 3 ou 4, dans lequel, après être découpé, le produit présent dans l'empreinte femelle est expulsé par injection d'air dans celle-ci.

6. Dispositif pour la mise en oeuvre du procédé selon l'une des revendications précédentes dans lequel, après un dispositif (1) de réalisation d'un produit cuit coextrudé (3), est prévu, dans une zone où l'enveloppe externe du produit est encore thermoplastique, un dispositif de matriçage (2) constitué d'une empreinte femelle (9) en creux située sur une surface cylindrique (7) et d'une empreinte mâle (12) en relief située sur une surface cylindrique (8), ces deux surfaces cylindriques (7,8) étant parallèles et mobiles en rotation autour de leur axe respectif, l'empreinte femelle (9) et l'empreinte mâle présentant chacune une l'arête de l'arrière et l'arête du front (35,36,37,38), l'arête de l'arrière (35) et l'arête du front (36) de l'empreinte mâle (9) présentant chacune d'un profil correspondant à celui de l'arête de l'arrière (37) et l'arête du front (38) de l'empreinte femelle (9).

7. Dispositif selon la revendication 6 dans lequel ces deux surfaces cylindriques (7,8) ont chacune plus de une des empreintes (9,12).

8. Dispositif selon la revendication 7 dans lequel une surface (10), séparant radialement les empreintes femelles (9), et une surface (13), séparant les empreintes mâles (12), délimitent, avec un flanc (14) d'une empreinte mâle (12), un espace (18) qui n'est pas dans le même niveau que la cavité (17) délimitée entre l'empreinte femelle (9) et l'empreinte mâle (12).

## Claims

1. A process for cutting a coextruded cooked food product produced by coextrusion cooking of an outer envelope based on cereals and any inner filling, characterized in that, after coextrusion cooking and while the outer envelope is still thermoplastic, the product is cut by stamping between two parallel cylindrical surfaces which are rotatable about their respective axes, the surfaces presenting respectively a female stamping element and a male stamping element which, during the stamping operation, cooperate to causing shearing of the extruded product.

2. A process according to claim 1, in which, during the stamping operation, a trailing edge and a leading edge of the two stamping elements cooperate to cause shearing of the extruded product.

3. A process according to claim 1 or claim 2 in which, during the stamping operation, the male stamping element penetrates into the female stamping element.

4. A process according to claim 1, 2 or 3, in which, the product is flattened before being cut.

5. A process according to claim 1, 2, 3 or 4, in which, after being cut, the product in the female stamping element is expelled by injecting air into the female stamping element.

6. An apparatus for carrying out the process according to any one of the preceding claims, in which there is provided, following an apparatus (1) for the production of a coextruded cooked product (3), in a zone where the outer envelope of the product is still thermoplastic, a stamping apparatus (2) comprising a recessed female stamping element situated in a cylindrical surface (7) and a raised male stamping element (12) situated in a cylindrical surface (8), the two cylindrical surfaces (7,8) being arranged in parallel and rotatable about their respective axes, the female stamping element (9) and the male stamping element (12) each presenting a trailing edge and a leading edge (35,26,37,38), the trailing edge (35) and the leading edge (36) of the male stamping element (12) each presenting a profile corresponding to that of the trailing edge (37) and the leading edge (38) of the female stamping element (9).

7. An apparatus according to claim 6 in which the two cylindrical surfaces (7,8) have more than one of the stamping elements (9, 12).

8. An apparatus according to claim 7 in which a surface (10) which radially separates the female stamping elements (9), and a surface (13) which radially separates the male stamping elements (12), define, with a flank (14) of the male stamping element (12), a space (18) which is not on the same level as the cavity (17) defined between the female stamping element (9) and the male stamping element (12).

## Patentansprüche

1. Verfahren zum Schneiden eines gekochten koextrudierten Nahrungsmittelprodukts, das durch Koch-Koextrusion einer äußeren Hülle auf der Basis von Getreide und einer beliebigen inneren Füllung hergestellt wurde, dadurch gekennzeichnet, daß dieses Produkt nach der Koch-Koextrusion, und während die äußere Hülle noch thermoplastisch ist, durch Stanzen zwischen zwei zueinander parallelen, um ihre jeweilige Achse drehbaren Flächen geschnitten wird, die jeweils eine vertiefte Prägung und eine erhabene Prägung aufweisen und während des Stanzvorgangs zusammenwirken, um eine Abscherung des koextrudierten Produkts vorzunehmen.

2. Verfahren nach Anspruch 1, bei welchem die Hinterkante und die Vorderkante der beiden Prägungen während des Stanzvorgangs zusammenwirken, um eine Abscherung des koextrudierten Produkte vorzunehmen.

3. Verfahren nach Anspruch 1 oder 2, bei welchem die erhabene Prägung während des Stanzvorgangs in die vertiefte Prägung eintritt.

4. Verfahren nach Anspruch 1, 2 oder 3, bei welchem das Produkt abgeflacht wird, bevor es geschnitten wird.

5. Verfahren nach Anspruch 1, 2, 3 oder 4, bei welchem das in der vertieften Prägung befindliche Produkt, nachdem es geschnitten wurde, durch Einspritzung von Luft in diese ausgestoßen wird.

6. Vorrichtung zur Durchführung des Verfahrens nach einem der vorhergehenden Ansprüche, in der hinter einer Vorrichtung (1) zur Herstellung eines gekochten koextrudierten Produkte (3) in einer Zone, in der die äußere Hülle des Produkts noch thermoplastisch ist, eine Stanzvorrichtung (2) vorgesehen ist, die aus einer vertieften Prägung oder Matrize (9), die auf einer zylindrischen Fläche (7) gelegen ist, und einer erhabenen Prägung oder Patrize (12) besteht, die auf einer zylindrischen Fläche (8) gelegen ist, wobei diese beiden zylindrischen Flächen (7, 8) zueinander parallel und um ihre jeweilige Achse drehbar sind und die vertiefte Prägung (9) und die erhabene Prägung jeweils eine Vorderkante und eine Hinterkante (35, 36, 37, 38)aufweisen, wobei die Hinterkante (35) und die Vorderkante (36) der erhabenen Prägung (12) jeweils ein Profil aufweisen, das dem der Hinterkante (37) und der Vorderkante (38) der vertieften Prägung (9) entspricht.

7. Vorrichtung nachAnspruch 6, bei welcher diese beiden zylindrischen Flächen (7, 8) jeweils mehr als eine der Prägungen (9, 12) aufweisen.

8. Vorrichtung nach Anspruch 7, in der eine Fläche (10), die die vertieften Prägungen (9) radial voneinander trennt, und eine Fläche (13), die die erhabenen Prägungen (12) voneinander trennt, mit einer Flanke (14) einer erhabenen Prägung (12) einen Raum (18) abgrenzen, der nicht in derselben Ebene wie der zwischen der vertieften Prägung (9) und der erhabenen Prägung (12) abgegrenzte Hohlraum (17) liegt.
